(19) Europäisches Patentamt
European Patent Office
Office européen des brevets

(11) **EP 4 765 451 A1**

(12) **EUROPEAN PATENT APPLICATION**

(43) Date of publication:
**24.06.2026 Bulletin 2026/26**

(21) Application number: **25224946.1**

(22) Date of filing: **18.12.2025**

(51) International Patent Classification (IPC):
*H01M 50/536* (2021.01)          *H01M 50/54* (2021.01)
*H01M 10/0585* (2010.01)

(52) Cooperative Patent Classification (CPC):
**H01M 50/536; H01M 10/0585; H01M 50/54**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **20.12.2024 IT 202400029355**

(71) Applicants:
• **G.D S.p.A.**
**40133 Bologna (IT)**
• **Alma Mater Studiorum - Università di Bologna**
**40126 Bologna (IT)**

(72) Inventors:
• **POLI, Federico**
**40133 Bologna (IT)**
• **FORTUNATO, Alessandro**
**40126 Bologna (IT)**
• **LIVERANI, Erica**
**40126 Bologna (IT)**
• **ASCARI, Alessandro**
**40126 Bologna (IT)**
• **ANGELONI, Caterina**
**40126 Bologna (IT)**

(74) Representative: **Tirloni, Bartolomeo et al**
**BTA Srl**
**2nd floor**
**Viale Papa Giovanni XXIII, 106**
**24121 Bergamo (IT)**

(54) **METHOD FOR PRODUCING AN ELECTRIC BATTERY CELL**

(57)    Method for producing an electric battery cell comprising:
- stacking in an interleaved manner a plurality of first sheets (1) in a first electrically conductive material and a plurality of second sheets (2) in a second electrically conductive material, wherein each first sheet (1) comprises a first tab (5) and wherein said first tabs form a first stack (7) in which said first tabs are in mutual contact;
- in a first station, mutually pre-welding the first tabs (5) to each other in the first stack (7) by means of a laser beam (10) to spatially fix the first tabs (5) to each other;
- subsequently, moving the first (1) and second sheets (2) interleaved from said first station to a second station; and
- in the second station, welding the first stack (7) of first tabs (5) to a first electrical contact (13) to realize an electrical connection between all the first sheets (1) and the first electrical contact (12).

FIG. 1

EP 4 765 451 A1

## Description

Technical field of the invention

The present invention relates to a method for producing an electric battery cell, for example a solid-state battery or a lithium-ion battery.

State of the art

The industrial production of electric batteries, for example lithium-ion batteries, comprises the production of the main component of the electric batteries, namely battery cells, which can be cylindrical, pouch (or bag-type), prismatic, etc. Each battery cell comprises first sheets (e.g. constituting the cathode) and second sheets (e.g. constituting the anode) in electrically conductive material (which acts as a current collector, typically aluminium for the cathode and copper for the anode), interleaved and aligned with each other so as to form a stack, and separated by a separator sheet normally composed of a plastic or ceramic polymer, the separator sheet having the function of an insulator between two adjacent sheets.

Each sheet is coated with active material, except for a portion, referred to as a tab, which protrudes from the stack itself to ensure electrical contact.

Once the stack of first sheets, second sheets, and separator sheets has been assembled, the stack is inserted into a container (or "case"). The stacks of tabs respectively of the cathode and of the anode are connected, by means of ultrasonic welding, respectively to the two electrical contacts of the battery cell that protrude from the container.

The container is then filled with an electrolyte liquid, for example by means of injection. The electrolyte, e.g. containing lithium salts, wets the first sheets and the second sheets to transfer electrical charges between the first sheets and the second sheets.

Summary of the invention

In the above context, the Applicant has found that the correct assembly of the battery cells that compose an electric battery, whether prismatic, cylindrical, or pouch, is an extremely complex operation, which requires long chains of machinery and phases and maximum precision in each phase, in order to ensure safety, quality, and reliability over time.

Within such operation, the Applicant has found that it is advantageous to subject the above-mentioned stacks of tabs that act as current collectors respectively of the anode and of the cathode to a pre-welding, subsequently to the phase of forming the stack of sheets and before (hence the prefix pre-) one or more subsequent operations, such as for example the welding of such stacks of tabs to the electrical contacts of the battery cell. The primary function of such pre-welding is to join the tabs to each other, fixing and compacting the tabs mutually, in order to improve the handling of the semi-finished product, in particular with respect to high-speed movements of the semi-finished product that could induce uncontrolled fluttering of the tabs. In this manner, the quality of subsequent operations is improved, such as for example the subsequent welding of the stack of tabs with further conductive elements, such as those forming part of the external electrical contacts of the battery cell. In such context, the pre-welding promotes the electrical contact of all the tabs, and therefore of all the current-collector sheets, with the external contacts.

The Applicant has also observed that performing such pre-welding by means of ultrasonic welding, typically used in the production of battery cells, would present limitations, such as low format flexibility, since accessibility from two sides is required (for the anvil and the sonotrode), tool wear, sensitivity to impurities on the surfaces, and difficult integration into automated production lines due to positioning requirements and the required contact force.

The Applicant has therefore addressed the problem of carrying out the pre-welding of the stacks of cathode and/or anode tabs so as to weld the entire stack throughout the entire thickness of the stack (i.e. involving all the sheets), with high welding process speed, with ease of automation, with low mechanical stress, with the capability to access joints that are difficult to reach, with low heat input and distortion, and/or with a wide range of possible welding geometries, all while ensuring high repeatability of the pre-welding in order to reduce defects and irregularities in the finished battery cells.

According to the Applicant one or more of the above-mentioned problems is solved by a method for producing an electric battery cell according to the appended claims and/or having one or more of the following characteristics.

According to one aspect the invention relates to a method for producing an electric battery cell.

Preferably the method comprises stacking in an interleaved manner a plurality of first sheets in a first electrically conductive material and a plurality of second sheets in a second electrically conductive material.

Preferably each first sheet comprises a first tab.

Preferably said first tabs form a first stack in which said first tabs are in mutual contact. Preferably the method comprises, in a first station, mutually pre-welding said first tabs to each other in said first stack by means of a laser beam to spatially fix said first tabs to each other.

Preferably the method comprises, subsequently, moving said interleaved first sheets and second sheets from said first station to a second station.

Preferably the method comprises, in said second station, performing an operation on said interleaved first and second sheets.

Preferably said operation in said second station comprises welding said first stack of first tabs to a first electrical contact to realize an electrical connection between all said first sheets and said first electrical contact.

According to the Applicant, the pre-welding makes the tabs well connected and compacted to each other, promoting high quality of the subsequent operations, such as the subsequent welding with the external electrical contact of the battery cell in the second station, wherein it is possible to obtain high precision and repeatability of the welding and assurance of electrical contact with all the sheets. Thanks to the pre-welding, the movement of the semi-finished product from the first station to the second station can take place at very high speed without the tabs fluttering in a disordered manner.

The Applicant observes however that the pre-welding presents specific issues, since the pre-welding concerns a welding of extremely thin sheets (having the thickness indicated above) stacked one on top of the other and typically without other elements being involved in the welding, as instead occurs for example in the subsequent welding in which, in addition to the tabs, the external electrical contact is also welded (where the presence of the external electrical contact alleviates some of the above-mentioned issues).

In such context, the Applicant has found that laser pre-welding, with respect for example to ultrasonic welding, is overall fast, is easily automatable, reduces mechanical stress (being a contactless process), allows access to joints that are difficult to reach, and/or allows a wide range of possible welding geometries.

The present invention in one or more of the above-mentioned aspects may present one or more of the following preferred characteristics.

Preferably said laser beam is a pulsed laser beam.

The Applicant has discovered that the pulsed laser beam mode, with respect to a continuous beam, reduces the overall thermal input to the material, maintaining the welding in a conduction regime, in which melting of the material occurs only by heat conduction from the energy of the laser beam, thereby maximizing productivity and welding quality.

The Applicant in fact observes that the pre-welding presents specific issues, since the pre-welding concerns a welding of extremely thin sheets (e.g. having the thickness indicated below) stacked one on top of the other and preferably without other elements being involved in the welding, as instead occurs for example in the subsequent welding in which, in addition to the tabs, the external electrical contact is also welded (where the presence of the external electrical contact alleviates some of the above-mentioned issues).

The Applicant has verified that in a comparative solution, in which the laser beam is not pulsed (i.e. at substantially continuous power), the high energy overall transferred to the material can facilitate vaporization of the material, in particular of the sheets first impinged by the laser beam, triggering a welding pool ("keyhole") surrounded by molten material that flows and fills the void while the laser beam penetrates into the material, sealing the welding (resulting in a welding with a very deep and narrow profile). Such keyhole welding mode can entail the formation of voids and other defects. For example, interstitial air between the sheets that is incorporated into the molten welding pool can lead to porosity and to ejection of molten material ("spattering").

The present invention, on the contrary, allows welding of all the tabs of the stack of tabs, in at least one or more points of the stack, avoiding or limiting the formation of resulting defects, for example due to vaporization or displacement of material.

Preferably, said pre-welding comprises directly modulating a laser source to generate said pulsed laser beam. Direct modulation, as known (see for example "Directly Modulated Semiconductor Lasers", IEEE JOURNAL OF SELECTED TOPICS IN QUANTUM ELECTRONICS, VOL. 24, NO. 1, JANUARY/FEBRUARY 2018 by Ning Hua Zhu et al.), consists of a modulation of the laser performed directly on the optical source, without using an external modulator, for example wherein the analog electronic signal is transposed onto the optical carrier by modulating the laser current with the analog electronic signal to be transposed directly onto the optical carrier. An alternative to direct modulation of the laser is operating the laser in continuous mode (so-called CW) and delegating to a further downstream device (modulator) the transposition onto the optical carrier, with higher costs and technological and construction complications. Thanks to direct modulation, especially for pulses of limited duration and/or for frequencies lower than those of typical pulsed lasers (e.g. on the order of kHz), the pulsed laser beam is generated in a simple and economical manner, since a laser source designed to emit continuously (typically less expensive than a pulsed laser) can be used, but operated according to the present invention in current modulation.

Preferably each second sheet comprises a second tab, wherein said second tabs form a second stack in which said second tabs are in mutual contact.

Preferably the method comprises, in said first station, mutually pre-welding said second tabs to each other in said second stack to spatially fix said second tabs to each other. Preferably said mutually pre-welding of said second tabs is performed with the same modalities described herein for mutually pre-welding said first tabs.

Preferably said operation in said second station comprises welding said second stack of second tabs to a second electrical contact to realize an electrical connection between all said second sheets and said second electrical contact.

In this manner the electrical connection also with the second sheets is completed.

Said welding in said second station can be performed with any suitable welding technique, for example by means of ultrasonic welding or, preferably, by means of a laser beam, continuous or pulsed. In the latter case, the welding is preferably pulsed laser welding, for example with the modalities described herein for the pre-welding.

In one embodiment said first and/or second electrical contact is a metal foil, preferably respectively in the first and/or second material, more preferably having a thickness greater than 100 $\mu$m.

In one embodiment said first and/or second electrical contact is a further stack of first and/or second tabs belonging respectively to further first and/or second sheets stacked with each other.

Preferably during said pre-welding, provision is made to mutually pre-weld only said first tabs to each other in said first stack, and optionally, separately, said second tabs in said second stack. In other words, the pre-welding does not involve further elements to be welded in addition to the first tabs, and preferably, in a separate pre-welding, the second tabs. The Applicant observes that pre-welding of only the ultra-thin tabs, with respect to welding of the tabs to each other and with other more robust and/or resistant elements such as an electrical terminal having a thickness of several hundred microns, entails specific issues solved by the present invention.

Preferably the method comprises providing a plurality of separator sheets, preferably in an electrically insulating material, for example a plastic or ceramic polymer, each separator sheet being interposed between each pair of consecutive first sheets and second sheets.

Preferably each first and/or second sheet, more preferably with the exception of the respective tabs, is coated, more preferably on both faces, with an active material.

Preferably the method comprises, subsequently to said pre-welding, inserting said first sheets and second sheets (and preferably said separator sheets) into a container (or "case"), and more preferably filling said container with an electrolyte liquid.

In this manner the battery cell is completed.

Preferably said plurality of first sheets and/or second sheets, and/or said plurality of separator sheets, consists of a number of respective sheets greater than or equal to thirty, more preferably greater than or equal to forty, and/or less than or equal to two hundred, more preferably less than or equal to one hundred.

Preferably said first and/or second material is a metal or a metal alloy.

Preferably said first material is copper and/or said second material is aluminium.

Preferably each first and/or second sheet has a respective thickness greater than or equal to 1 $\mu$m and/or less than or equal to 30 $\mu$m. Preferably said thickness of each first and/or second sheet is greater than or equal to 2 $\mu$m, more preferably greater than or equal to 5 $\mu$m, and/or less than or equal to 20 $\mu$m, more preferably less than or equal to 15 $\mu$m.

Preferably said pre-welding comprises directing said laser beam onto, and preferably substantially perpendicularly to, a face of said first stack, and preferably also of said second stack, more preferably said face being substantially parallel to a prevailing development plane of said tabs. In other words the laser beam preferably impinges on the free face of an end tab of the stack of tabs. The Applicant observes that incidence of the laser beam directly on the ultra-thin tabs, rather than on more robust and/or resistant elements such as an electrical terminal having a thickness of several hundred microns, entails specific issues solved by the present invention.

By "substantially perpendicularly" it is meant for example that an angle formed by said laser beam with a projection of the laser beam onto said face is greater than or equal to 75° and less than or equal to 105°, for example greater than or equal to 85° and less than or equal to 95°, for example 90°.

Preferably said pre-welding comprises emitting said laser beam from an optical fiber, which can be single-mode (wherein a single guided mode or a plurality of guided modes propagate) or multimode.

Preferably the method comprises, during at least part of said pre-welding by means of said laser beam, mutually translating (more preferably the laser beam is translated while keeping the stack of tabs stationary) said laser beam relative to said first and/or second tabs with a translation speed, v, more preferably along a predetermined trajectory, e.g. rectilinear, on a face of said first stack, and preferably also of said second stack. In other words the spot of the laser beam moves on the surface of the stack of tabs (e.g. the above-mentioned free face) with speed v.

Preferably, said translation speed is greater than or equal to 60 mm/s, more preferably greater than or equal to 80 mm/s, and/or less than or equal to 500 mm/s. In this manner the welding is fast.

Preferably said pulsed laser beam has a pulse frequency, f, a pulse intensity, I, and/or a pulse duration, d.

By pulse frequency it is meant the inverse of the pulse repetition period T.

By pulse intensity, I, or peak intensity, it is meant the ratio between the maximum pulse power, $P_h$, and the area of the cross section of the laser beam (or "spot"), $A_s$, according to the formula $I = \dfrac{P_h}{A_s}$.

It is observed that the power may not be homogeneous over the entire spot. The power density distribution within the spot can be of a quasi-Gaussian type, especially in the case of single-mode lasers, can be homogeneously distributed over the area of the spot, or can be distributed over two or more concentric laser beams propagated from the same optical fiber. In the latter case, the power can be distributed in variable percentages among the various laser beams, and such percentages can be dependent on each other (with discrete combinations of power values on the various laser beams) or independent (on each laser beam any power up to the maximum value allowed by the source can be delivered).

It is further observed that the power may not be homogeneous over the duration of the pulse itself, for example with a ramped variation of the power within the pulse duration. Preferably said pulse frequency is greater than or equal to 1 KHz and/or less than or equal to 2 MHz.

Preferably said pulse duration, d, is greater than or equal to 10 ns and/or less than or equal to 1 ms.

Preferably said pulse intensity is greater than or equal to 5 MW/cm$^2$ and/or less than or equal to 150 MW/cm$^2$.

The Applicant has experimentally verified that by selecting the values of the above-mentioned fundamental process parameters of the pulsed laser beam within the above-mentioned ranges, it is possible to weld the stack throughout the entire thickness, minimizing or eliminating vaporization of one or more tabs.

The Applicant observes that the selection of the specific values of the above-mentioned parameters within the above-mentioned ranges depends on the specific operating conditions, in particular the number and the thickness of the tabs in each stack, the translation speed of the laser beam, the power distribution on the laser spot, etc., according to the considerations set out below. The person skilled in the art, starting from a choice of values for one or more parameters within the ranges described herein, is able to select the remaining parameters, within the above-mentioned ranges, on the basis of the interrelation among the process parameters.

The duration, the frequency, and the period T are correlated to the duty cycle, $D_c$, defined as the percentage of the period T during which emission of the pulse occurs, according to the formula

$$D_c = \frac{d}{T} * 100 = d * f * 100 .$$

Preferably the duty cycle is less than or equal to 50%, more preferably less than or equal to 40%, and/or greater than or equal to 10%, more preferably greater than or equal to 20%. It is observed that the duty cycle is always less than 100% (and therefore the duration is always less than the inverse of the frequency).

By percentage overlap O it is meant the parameter defined by the formula:

$$O = \left( 1 - \frac{v}{f * d_s} * 100 \right)$$

where $d_s$ is the equivalent diameter of the spot, assuming a circular spot, given by the formula $d_s = \sqrt{\left( \frac{4As}{\pi} \right)}$. In the case of a circular spot, the equivalent diameter coincides with the actual diameter.

It is observed that the actual overlap, $O_r$, between two successive pulses can be different from (typically greater than) the above-mentioned overlap. For example, in the case of a circular spot, the actual overlap can be given by the formula:

$$O_r = \left( 1 - \frac{v}{f * (d_s + v * d)} * 100 \right).$$

As can be seen, as the frequency and the spot diameter increase, and/or as the translation speed decreases, the overlap between successive pulses increases.

Preferably, a percentage overlap (O) between successive pulses is less than or equal to 60%, more preferably less than or equal to 40%, even more preferably less than or equal to 30%.

The Applicant has experimentally verified that such upper limits of the overlap on the one hand provide a satisfactory welding in terms of welding of the entire stack along the entire thickness in at least one or more points, and, on the other hand, avoid the above-described phenomenon.

In some embodiments, the theoretical overlap, and possibly also the actual overlap, is positive, i.e. the pulses maintain a certain degree of overlap. In such case, the welding is continuous along the translation direction of the laser beam, at least in the portion of the stack facing the laser beam and possibly throughout the entire thickness of the stack of tabs.

In other embodiments, the theoretical overlap, and possibly also the actual overlap, is negative, for example less than or equal to -20%, or less than or equal to -40%.

Preferably said pre-welding comprises creating on said first stack, and preferably also said second stack, of tabs a spatial succession of welding points, more preferably as deep as the entire stack, distinct from each other. The Applicant has in fact discovered that the present invention provides satisfactory results also in the case of welding by spatially separated points on the welding face ("tack welding"), and/or in the case of welding of the entire thickness of the stack only at points spatially separated from each other.

It is observed that the pulse intensity increases as the pulse power increases and decreases as the equivalent diameter increases.

Preferably the equivalent diameter of the spot, $d_s$, is greater than or equal to 40 $\mu$m, and/or less than or equal to 200 $\mu$m.

Preferably, the maximum pulse power, $P_h$, is greater than or equal to 500 W, and/or less than or equal to 5000 W.

Preferably the energy per pulse, E, given by the formula $E = P_h * d$, is greater than or equal to 0.1 mJ and/or less than or equal to 1J.

By power P effectively emitted during the process it is meant $P = E * f$.

In one embodiment, said pulse frequency is less than or equal to 30 kHz, more preferably less than or equal to 20 kHz, even more preferably less than or equal to 10 kHz, said pulse duration is greater than or equal to 50 ns, more preferably greater than or equal to 100 ns, and less than or equal to 300 ns, more preferably less than or equal to 200 ns, and said pulse intensity is greater than or equal to 10 MW/cm$^2$, more preferably greater than or equal to 20 MW/cm$^2$, and less than or equal to 100 MW/cm$^2$, more preferably less than or equal to 50 MW/cm$^2$.

In such embodiment, preferably the maximum pulse power, $P_h$ is greater than or equal to 1000 W, and/or less than or equal to 1500 W.

In such embodiment, preferably the equivalent diameter of the spot, $d_s$, is greater than or equal to 50 $\mu$m, and/or less than or equal to 100 $\mu$m.

In such embodiment, preferably the energy per pulse is greater than or equal to 0.1 J and/or less than or equal to 0.5 J.

In such embodiment, preferably the duty cycle is greater than or equal to 10%, more preferably greater than or equal to 20%, and/or less than or equal to 50%, more preferably less than or equal to 40%.

In such embodiment, preferably the overlap is greater than zero, more preferably greater than or equal to 10%, and/or less than or equal to 30%.

In such embodiment, preferably the translation speed is greater than or equal to 50 mm/s, and/or less than or equal to 200 mm/s.

In one embodiment said pulse frequency is greater than or equal to 500 kHz, more preferably greater than or equal to 800 kHz, even more preferably greater than or equal to 1000 kHz, said pulse duration is less than or equal to 120 ns, more preferably less than or equal to 80 ns, and/or greater than or equal to 20 ns, and said pulse intensity is greater than or equal to 10 MW/cm$^2$, more preferably greater than or equal to 20 MW/cm$^2$, and/or less than or equal to 100 MW/cm$^2$, more preferably less than or equal to 50 MW/cm$^2$.

In such embodiment, preferably the maximum pulse power, $P_h$ is greater than or equal to 1200 W, and/or less than or equal to 1800 W.

In such embodiment, preferably the equivalent diameter of the spot, $d_s$, is greater than or equal to 50 $\mu$m, and/or less than or equal to 100 $\mu$m.

In such embodiment, preferably the energy per pulse is less than or equal to 0.2 J.

In such embodiment, preferably the duty cycle is greater than or equal to 20%, more preferably greater than or equal to 30%, and/or less than or equal to 60%.

In such embodiment the translation speed can be the maximum made available by the movement system, for example greater than or equal to 10 m/s, in order to realize a spot welding, i.e. spatially discontinuous as described above.

It is specified that some steps of the method described above can be independent of the order of execution reported, except where a sequence or simultaneity between two or more steps is expressly indicated. Furthermore, some steps can be optional. Furthermore, some steps can be performed iteratively, or can be performed in series or in parallel with other steps of the method.

Brief description of the figures

Figure 1 shows a semi-finished product of a battery cell in the pre-welding phase of the method according to the present invention;
Figure 2 shows the semi-finished product of Figure 1 in the subsequent welding phase of the method according to one embodiment of the present invention.

Brief description of the figures

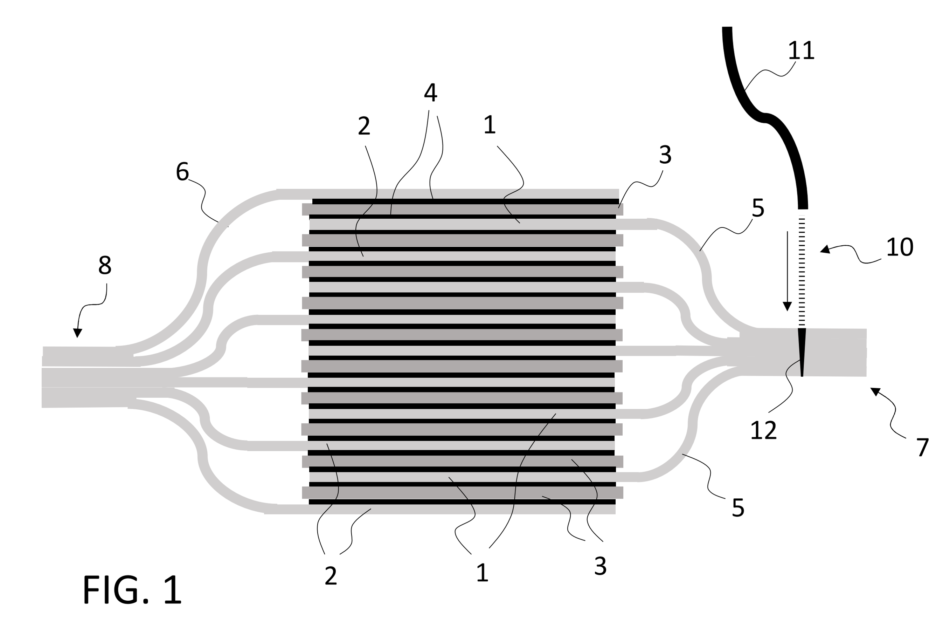

Figure 1 shows a semi-finished product of a battery cell in the pre-welding phase of the method according to the present invention;

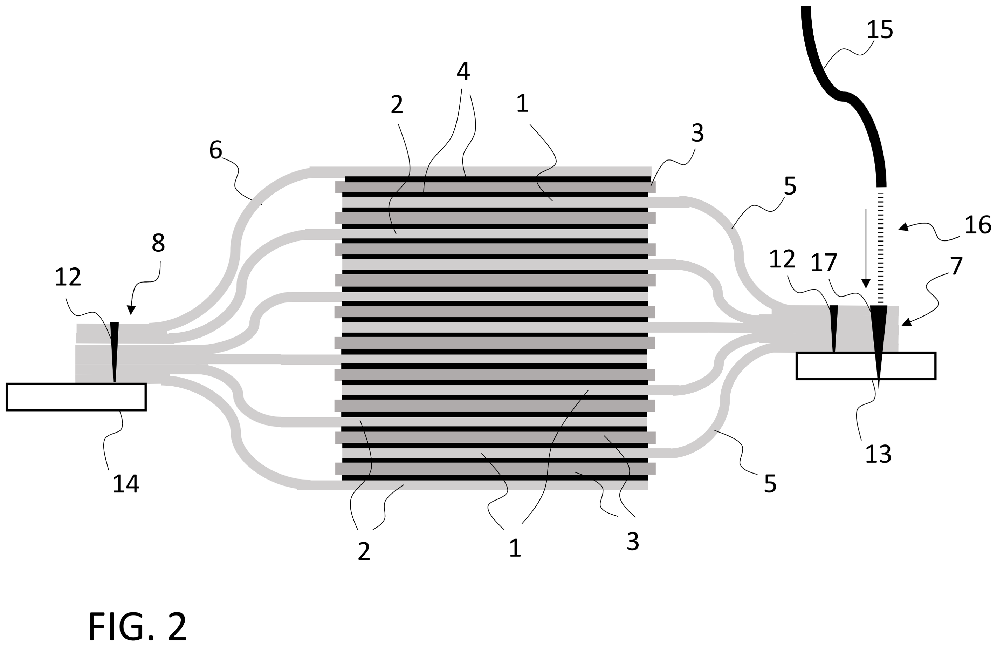

Figure 2 shows the semi-finished product of Figure 1 in the subsequent welding phase of the method according to one embodiment of the present invention.

Detailed description of some embodiments of the invention

The features and advantages of the present invention will be further clarified by the following detailed description of some embodiments, provided by way of example and not of limitation of the present invention, with reference to the accompanying figures.

The method for producing an electric battery cell first comprises stacking in an interleaved manner a plurality of first sheets 1 in a first electrically conductive material, for example copper, and a plurality of second sheets 2 in a second electrically conductive material, for example aluminium, as schematically shown in Figure 1. Between each pair of consecutive first sheets and second sheets, a separator sheet 3 in an electrically insulating material is interleaved.

As for example known, each first sheet and second sheet is coated, preferably on both faces, with an active material 4 (represented by the black strips in the figures).

The stacking of the sheets 1, 2 and of the separator sheets 3 can take place by means of different construction methodologies, per se known, such as stacking of individual pre-cut sheets, z-folding of a continuous separator sheet between pre-cut anode sheets and cathode sheets, or rolling (or "winding"), in which the continuous precursor sheets of the sheets are first stacked one on top of the other and then continuously wound onto a base. Each first sheet and second sheet 1, 2 respectively comprises a first tab 5 and a second tab 6, not coated with active material (i.e., in the example, only in metal), which protrudes from the stack of interleaved first sheets and second sheets to form a respective first stack 7 and second stack 8 of first tabs and second tabs 5, 6, respectively, wherein the tabs are in mutual contact or in close proximity.

Although in the figures the stacks of tabs 7 and 8 are schematically shown on opposite sides of the stack of interleaved sheets, in some embodiments the stacks of tabs 7 and 8 can be located on the same side of such stack.

Preferably, the first tabs 5 and the second tabs 6 are mutually pre-welded to each other respectively in the first stack 7 and in the second stack 8 by means of a laser beam 10, more preferably pulsed, to spatially fix respectively all the first tabs and all the second tabs of each stack to each other. For this purpose, it is possible to use a single source emitting a single laser beam 10 to pre-weld both the first tabs and the second tabs in distinct time phases, or a dedicated laser source for each first stack and second stack (in such case, the two welding operations can take place simultaneously).

Preferably the laser beam is directed by means of an optical fiber 11, which can be single-mode or preferably multimode. The present invention comprises any distribution of the power on the spot: uniform or non-uniform, radially uniform or non-uniform, top-hat, Gaussian, ring-shaped, etc.

Preferably provision is made to mutually translate the stack of tabs and the laser beam (preferably the latter is moved while keeping the stack of tabs stationary), so that the spot of the laser beam moves on the face of the respective stack with a translation speed, v, for example along a rectilinear segment.

Preferably the laser beam is directed onto, for example substantially orthogonally to, a free end face of the uppermost tab of the respective stack of tabs, said face being substantially parallel to the development plane of the tabs, as shown in figure 1.

In other embodiments, not shown, the laser beam can be directed (exclusively or in addition to the above-mentioned face), onto the end face of the stack orthogonal to the development plane of the tabs (i.e. on the thickness side).

Thanks to the transfer of energy from the laser beam, the material is melted and, following re-solidification, a welding 12 is obtained which, at least at one or more points, involves all the tabs of the respective stack, i.e. develops along the entire thickness of the stack. As explained above, the pulsed nature of the laser can limit or avoid vaporization of the material, substantially inducing only melting by conduction.

In a first example, each stack of tabs contains fifty tabs (and therefore fifty first sheets and fifty second sheets) having a thickness of 6 $\mu$m for the copper tabs and 12 $\mu$m for the aluminium tabs.

Preferably a laser source is used, for example a multimode fiber laser marketed by nLight alta™, power 2.5 kW, wavelength 1070 nm, normally operating in continuous mode since the laser source is designed for such use, directly modulating (e.g. with ON/OFF modes) the supply current to the pump diodes that provide energy to the resonator of the laser source (operation made possible thanks to the limited pulse frequency, for example up to 100 kHz).

The parameters used are exemplarily the following:

| Parameter | Value |
|---|---|
| maximum pulse power, $P_h$ | 1200 W |
| spot diameter (circular), $d_s$ | 68 $\mu$m |
| pulse intensity, I | 33 MW/cm$^2$ |
| Duration, d | 0.15 ms |
| Frequency, f | 2 kHz |
| Pulse energy | 0.18 J |
| Duty cycle | 30% |
| Overlap, O | 19% |
| power effectively emitted | 360 W |
| Translation speed, v | 110 mm/s |

Subsequently to the pre-welding (optionally with the interposition of further phases, not described herein since for example known), as shown in Figure 2, provision is made to weld the first stack and the second stack of tabs respectively to a first electrical contact 13 and a second electrical contact 14 (shown only schematically) to realize an electrical connection between all the first sheets and second sheets 1, 2 and the first electrical contact and the second electrical contact 13, 14, respectively.

Preferably such welding takes place in a second station distinct from a first station in which the pre-welding takes place, the stack of interleaved first sheets and second sheets being moved from the first station to the second station (not shown).

The welding to the electrical contacts 13, 14, which constitute or are electrically connected to the electrical terminals accessible from the outside of the battery cell, can take place by ultrasonic welding, or by means of a pulsed laser beam 16, for example as described above, delivered through an optical fiber 15. The result is a welding 17 that involves the entire thickness of the stack of tabs and the electrical contact.

Typically provision is then made to insert the stack of interleaved first sheets and second sheets with the pre-welded tabs into a container (or "case"), not shown, and to fill the container with an electrolyte liquid.

The production of battery cells can comprise further phases before and/or after those described above, for example as per se known.

**Claims**

1. Method for producing an electric battery cell, said method comprising:

    - stacking in an interleaved manner a plurality of first sheets (1) in a first electrically conductive material and a plurality of second sheets (2) in a second electrically conductive material, wherein each first sheet (1) comprises a first tab (5) and wherein said first tabs form a first stack (7) in which said first tabs are in mutual contact;
    - in a first station, mutually pre-welding said first tabs (5) to each other in said first stack (7) by means of a laser beam (10) to spatially fix said first tabs (5) to each other;
    - subsequently, moving said first (1) and second sheets (2) interleaved from said first station to a second station; and
    - in said second station, performing an operation on said interleaved first and second sheets (1, 2),

    wherein said operation in said second station comprises welding said first stack (7) of first tabs (5) to a first electrical contact (13) to realize an electrical connection between all said first sheets (1) and said first electrical contact (12).

2. Method according to claim 1, wherein said laser beam (10) is a pulsed laser beam.

3. Method according to claim 2, wherein said pre-welding comprises directly modulating a laser source to generate said pulsed laser beam.

4. Method according to claim 2 or 3, wherein said pulsed laser beam has a pulse frequency (f), a pulse intensity (I), and a pulse duration (d), wherein said pulse frequency is greater than or equal to 1 kHz and less than or equal to 2 MHz, wherein said pulse duration is greater than or equal to 10 ns and less than or equal to 1 ms, and wherein said pulse intensity is greater than or equal to 5 MW/cm$^2$ and less than or equal to 150 MW/cm$^2$.

5. Method according to any one of claims from 2 to 4, comprising, during at least part of said pre-welding by means of said laser beam (10), mutually translating said laser beam relative to said first tabs with a translation speed (v), wherein said pre-welding comprises creating on said first stack of tabs a spatial succession of distinct welding points.

6. Method according to any one of the previous claims, wherein each first sheet (1) has a respective thickness greater than or equal to 1 μm and less than or equal to 30 μm, and wherein said plurality of first sheets consists of a number of respective sheets greater than or equal to thirty.

7. Method according to any one of the previous claims, wherein said pre-welding comprises directing said laser beam (10) onto a face of said first stack substantially parallel to a prevailing development plane of said tabs.

8. Method according to claim 7, wherein said laser beam (10) is substantially perpendicular to said face of said first stack.

9. Method according to any one of the previous claims, wherein said pre-welding comprises emitting said laser beam (10) from an optical fiber (11).

10. Method according to any one of the preceding claims, wherein during said pre-welding provision is made to mutually pre-weld only said first tabs (5) to each other in said first stack (7).

11. Method according to any one of the preceding claims, wherein said welding in said second station is performed by means of laser beam welding.

12. Method according to claim 11, wherein said welding is pulsed laser beam welding.

13. Method according to claim 4, wherein said pulse frequency is less than or equal to 20 KHz, wherein said pulse duration is greater than or equal to 50 ns and less than or equal to 300 ns and wherein said pulse intensity is greater than or equal to 10 MW/cm$^2$ and less than or equal to 100 MW/cm$^2$.

FIG. 1

FIG. 2

EP 4 765 451 A1

Europäisches
Patentamt

European
Patent Office

Office européen
des brevets

# EUROPEAN SEARCH REPORT

**Application Number**

EP 25 22 4946

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 108 375 A1 (LG ENERGY SOLUTION LTD [KR]) 28 December 2022 (2022-12-28) * paragraphs [0059] - [0063]; figure 1 * ----- | 1,7,8, 10,11 | INV. H01M50/536 H01M50/54 H01M10/0585 |
| X | US 2024/222813 A1 (ZHAI MEIYU [US] ET AL) 4 July 2024 (2024-07-04) | 1-3,5-12 | |
| Y | * paragraphs [0036], [0037], [0057] - [0065], [0082]; figure 1 * ----- | 4,13 | |
| Y | KR 2015 0143049 A (LG CHEMICAL LTD [KR]) 23 December 2015 (2015-12-23) * paragraph [0027]; claims 1,5 * ----- | 4,13 | |

**TECHNICAL FIELDS SEARCHED (IPC)**

H01M

The present search report has been drawn up for all claims

| Place of search | Date of completion of the search | Examiner |
|---|---|---|
| Munich | 13 April 2026 | Rischard, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 4946

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2026

| Patent document cited in search report | | Publication date | Patent family member(s) | | Publication date |
|---|---|---|---|---|---|
| EP 4108375 | A1 | 28-12-2022 | CN | 115397599 A | 25-11-2022 |
| | | | EP | 4108375 A1 | 28-12-2022 |
| | | | ES | 3042443 T3 | 20-11-2025 |
| | | | HU | E073093 T2 | 28-12-2025 |
| | | | JP | 7615442 B2 | 17-01-2025 |
| | | | JP | 2023521810 A | 25-05-2023 |
| | | | JP | 2025013754 A | 28-01-2025 |
| | | | KR | 20220100422 A | 15-07-2022 |
| | | | PL | 4108375 T3 | 17-11-2025 |
| | | | US | 2023339038 A1 | 26-10-2023 |
| | | | WO | 2022149916 A1 | 14-07-2022 |
| US 2024222813 | A1 | 04-07-2024 | NONE | | |
| KR 20150143049 | A | 23-12-2015 | NONE | | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **NING HUA ZHU**. Directly Modulated Semiconductor Lasers. *IEEE JOURNAL OF SELECTED TOPICS IN QUANTUM ELECTRONICS*, January 2018, vol. 24 (1)